# EUROPEAN PATENT APPLICATION

(11) **EP 4 657 037 A1**
(43) Date of publication of application: **03.12.2025**
(21) Application number: 25179885.6
(22) Date of filing: 30.05.2025
(51) Int. Cl.: G01K 1/08

(54) **TEMPERATURE PROBE ASSEMBLY AND TEMPERATURE PROBE STORAGE BASE**

(30) Priority: 31.05.2024 CN 202421237728 U
(71) Applicant: Shenzhen Typhur Technology Co., Ltd, Shenzhen, Guangdong 518067 (CN)
(72) Inventor: LI, Zhuodong, Shenzhen Guangdong, 518067 (CN); SUN, Liang, Shenzhen Guangdong, 518067 (CN); HAN, Xiaoqiang, Shenzhen Guangdong, 518067 (CN); HUANG, Zhanbin, Shenzhen Guangdong, 518067 (CN)
(74) Representative: KIPA AB

(57) **Abstract**

A temperature probe assembly and a temperature probe storage base, a probe accommodating chamber of the base is arranged on the side opposite to the screen of the display surface, in a direction perpendicular to the screen, or the probe accommodating chamber and the screen are arranged along the thickness direction of the base body. By utilizing the space on the back side of the display module to configure the probe accommodating chamber, the overall size of the base in the direction parallel to the screen is reduced, resulting in a structure that is easier to hold and enhancing the portability of the base.

## Description

### Technical Field

The present application relates to the field of food cooking, and more particularly, to a temperature probe assembly for detecting the temperature of food ingredients.

### Background Art

With the advancement of technology and the increasing demands for better taste and nutrition in food, users now expect more precise control over the temperature during the cooking process, such as accurately monitoring the temperature of food ingredients and the water used for heating. In response, temperature detection devices designed for use in food cooking have emerged.

A temperature probe is a type of temperature detection device that can be inserted into the interior of food during cooking to detect the internal temperature of various parts of the food. It is also referred to as a handheld temperature probe, handheld thermometer, or food probe. This type of temperature probe is typically configured separately from the cooking equipment. Therefore, the temperature probe is usually paired with a dedicated storage base, where the probe can be stored within a probe accommodating chamber. Such a storage base is often equipped with a display screen for presenting relevant information. However, in existing storage bases for temperature probes, the arrangement between the display screen and the probe accommodating chamber is often suboptimal, resulting in an overall larger base width, which compromises portability and ease of handling.

### Summary of the Invention

The present application provides a temperature probe assembly and a temperature probe storage base, aiming to improve portability and ease of handling.

To achieve the above objective, one embodiment of the present application provides a temperature probe storage base, comprising a base body and a display module. The display module includes a screen and is defined on the base body, with the screen located on one side of the base body. The base body includes at least one probe accommodating chamber configured to receive a temperature probe. In a direction perpendicular to the screen, the probe accommodating chamber is disposed on the side opposite to the display surface of the screen.

In this embodiment, the probe accommodating chamber is arranged in a first direction perpendicular to the screen, and located on the back side of the display module, which is opposite to the screen's display surface. By utilizing the space behind the display module to accommodate the probe, the overall size of the base in a second direction parallel to the screen is reduced, resulting in a structure that is easier to hold and enhancing the portability of the base.

In one embodiment, the probe accommodating chamber includes a side opening slot. The base body includes a first surface and a second surface opposite to each other. The screen is disposed on the first surface, and the side opening slot is disposed on the second surface.

In one embodiment, the side opening slot is arranged along the longitudinal direction of the probe accommodating chamber, enabling a user to observe the temperature probe inside the chamber through the side opening slot.

In one embodiment, one end of the probe accommodating chamber includes a probe insertion opening, and one end of the side opening slot is in direct communication with the probe insertion opening.

In one embodiment, the probe accommodating chamber includes a probe insertion opening, which is arranged along the longitudinal direction of the probe accommodating chamber.

In one embodiment, the probe accommodating chamber is a hole-like structure with a probe insertion opening at one end, and the surrounding side of the hole-like structure is enclosed.

In one embodiment, at least two probe accommodating cavities are provided and arranged side by side in a direction parallel to the screen.

In one embodiment, the base further includes a charging module defined on the base body. The probe accommodating chamber is provided with a first charging contact and at least one second charging contact. When the first charging contact and any of the second charging contacts are electrically connected, the base body is configured to charge the temperature probe inserted into the probe accommodating chamber.

To achieve the above objective, another embodiment of the present application provides a temperature probe storage base, comprising a base body and a display module. The display module includes a screen and is defined on the base body, with the screen located on one side of the base body. The base body includes at least one probe accommodating chamber configured to receive a temperature probe, the probe accommodating chamber and the screen are arranged along the thickness direction of the base body.

According to this embodiment, the probe accommodating chamber and the screen are arranged along the thickness direction of the base body. By utilizing the space in the thickness direction to configure the probe accommodating chamber, the overall size of the base in the direction parallel to the screen is reduced, resulting in a structure that is easier to hold and enhancing portability.

To achieve the above objective, yet another embodiment of the present application provides a temperature probe assembly, comprising a temperature probe and any of the temperature probe storage bases described above. The temperature probe is configured to be stored in and removable from the probe accommodating chamber of the temperature probe storage base.

According to this embodiment, by adopting a temperature probe storage base that is more convenient to hold and carry, the temperature probe assembly as a whole offers improved ergonomics and portability.

### Brief Description of the Drawings

FIGS. 1 and 2 are schematic structural diagrams of a temperature probe assembly from different perspectives according to one embodiment of the present application, in which the base body includes one probe accommodating chamber.
FIGS. 3 and 4 are schematic structural diagrams of a temperature probe assembly from different perspectives according to one embodiment of the present application, in which the base body includes two probe accommodating cavities.
FIGS. 5 and 6 are schematic structural diagrams of a temperature probe assembly from different perspectives according to one embodiment of the present application, in which the base body includes four probe accommodating cavities.
FIG. 7 is a schematic diagram showing the electrical connection between the temperature probe and the charging contacts within the probe accommodating chamber, according to one embodiment of the present application.

### Detailed Description of the Embodiments

The present invention will now be described in further detail with reference to the accompanying drawings and specific embodiments. Similar elements in different embodiments are denoted by similar reference numerals. In the following embodiments, many detailed descriptions are provided to facilitate a better understanding of the present application. However, it will be readily apparent to those skilled in the art that certain features may be omitted under specific circumstances or replaced with other components, materials, or methods.

In some cases, certain operations related to this application are not explicitly shown or described in the specification to avoid overloading the description of the core part of the invention. For those skilled in the art, it is not necessary to detail such operations, as they can be readily understood based on the present disclosure and general technical knowledge in the field.

Moreover, the features, operations, or characteristics described in the specification may be combined in any suitable manner to form various embodiments. The steps or actions in method descriptions may also be rearranged or adjusted in a sequence that would be apparent to those skilled in the art. Therefore, the orders of steps or features shown in the specification and drawings are intended merely for clarity and should not be construed as mandatory unless explicitly stated otherwise.

The ordinal terms such as "first," "second," etc., used in this document are merely for distinguishing described elements and carry no inherent order or technical significance. Unless otherwise specified, the terms "connected" or "coupled" shall include both direct and indirect connections or couplings.

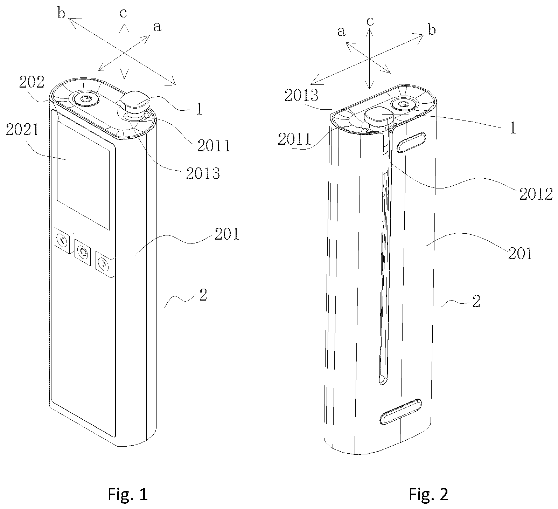

The present application provides a temperature probe assembly. Please refer to FIGS. 1-6, in some embodiments, the temperature probe assembly includes a temperature probe 1 and a temperature probe storage base 2. The temperature probe 1 is configured to be stored in and removable from a probe accommodating chamber 2011 of the storage base 2. The temperature probe 1 is designed to be inserted into the interior of a food item before or during or after cooking to detect its internal temperature.

Specifically, the temperature probe 1 can be inserted into the food to measure its internal temperature, especially to accurately capture the minimum internal temperature during the cooking process . The food may be located in any cooking environment, including but not limited to: steaming, boiling, baking, roasting, pan-frying, deep-frying, or any other form of thermal processing.

To create a more portable and easier-to-hold temperature probe storage base 2 (hereinafter referred to as "the base"), please refer again to FIGS. 1-6, in some embodiments, the base 2 comprises a base body 201 and a display module 202. The display module 202 includes a screen 2021. The display module 202 may be either a visual display or a touch display screen module capable of touch operation. Accordingly, the screen 2021 may be a standard display screen or a touchscreen. The display module 202 is defined on the base body 201, with the screen 2021 located on one side of the base body 201.

Please refer to FIGS. 1-6, in some embodiments, the base body 201 includes at least one probe accommodating chamber 2011 configured to receive the temperature probe 1. The probe accommodating chamber 2011 has a chamber shape that matches the external contour of the corresponding temperature probe 1 to accommodate it. Since the temperature probe 1 typically has an elongated structure, the corresponding probe accommodating chamber 2011 is also an elongated chamber extending longitudinally. In the embodiments shown in FIGS. 1-6, the temperature probe 1 can be fully inserted into and received within the probe accommodating chamber 2011. In other embodiments, the temperature probe 1 may also be partially embedded or stored in other ways within the probe accommodating chamber 2011.

Referring to FIGS. 1 and 2, in some embodiments, in a direction perpendicular to the screen 2021 (referred to as the first direction a), the probe accommodating chamber 2011 is defined on the side opposite to the display surface of the screen 2021 (i.e., the rear side of the display module 202). In this embodiment, the space of the base body 201 on the rear side of the display module 202 is utilized to accommodate the probe accommodating chamber 2011, thereby reducing the size of the base 2 in the direction parallel to the screen 2021 (referred to as the second direction b), forming a structure that is easier to grip and enhancing the portability of the base 2. In contrast, if the probe accommodating chamber 2011 and the screen 2021 are arranged along the second direction b, due to the screen 2021 typically being wider than it is thick, this configuration would increase the size of the base body 201 in the second direction b, which would be disadvantageous in terms of portability and ergonomics.

Alternatively, in other embodiments (also referring to FIGS. 1 and 2), the screen 2021 may not serve as a reference; instead, the probe accommodating chamber 2011 and the screen 2021 may be arranged along the thickness direction of the base body 201. Typically, the base body 201 includes a length, width, and thickness dimension, where the thickness direction is the smallest among the three. In the embodiments illustrated in FIGS. 1 and 2, the thickness direction of the base body 201 corresponds to the first direction a, the width direction to the second direction b, and the length direction to the third direction c. Of course, in other embodiments, the thickness and width directions of the base body 201 may be defined differently. In this embodiment, the probe accommodating chamber 2011 utilizes the space in the thickness direction, which helps reduce the size of the base 2 in the direction parallel to the screen 2021, thereby improving grip and portability.

Further referring to FIGS. 1-6, in some embodiments, the probe accommodating chamber 2011 includes a side opening slot 2012, which allows users to observe the internal state of the probe accommodating chamber 2011. For example, users may check whether the temperature probe 1 is present, the placement status of the probe within the probe accommodating chamber 2011, the charging status of the probe (if the base 201 includes a charging function), or other related conditions.

To prevent the temperature probe 1 from slipping out through the side opening slot 2012, in some embodiments, the length and/or width of the side opening slot 2012 is designed to be smaller than the dimensions of the temperature probe 1, thereby making it impossible for the probe to fall out through the slot.

Again referring to FIGS. 1-6, in some embodiments, the base body 201 includes a first surface and a second surface opposite to each other. The screen 2021 is defined on the first surface, while the side opening slot 2012 is disposed on the second surface. In this structure, the screen 2021 and the side opening slot 2012 are positioned on opposite sides, thereby fully utilizing the two opposite surfaces of the base body 201. This enhances the compactness of the base structure and improves both the portability and gripablity of the base 2.

Referring still to FIGS. 1-6, in some embodiments, the side opening slot 2012 is arranged along the longitudinal direction of the probe accommodating chamber 2011. This configuration enlarges the user's viewing window, allowing for better observation of the temperature probe 1 inside the probe accommodating chamber 2011 through the side opening slot 2012.

Referring to FIGS. 1-6, in some embodiments, one end of the probe accommodating chamber 2011 is provided with a probe insertion opening 2013, which is defined at one end of the probe accommodating chamber 2011 in a longitudinal direction. The temperature probe 1 can be inserted into the probe accommodating chamber 2011 through the probe insertion opening 2013. One end of the side opening slot 2012 is directly connected to the probe insertion opening 2013. This configuration not only expands the user's field of view but also increases the opening size of the probe insertion opening 2013, thereby making it easier to insert the temperature probe 1 into the probe accommodating chamber 2011.

Additionally, in other embodiments, the probe insertion opening 2013 of the probe accommodating chamber 2011 may also be arranged along the longitudinal direction of the probe accommodating chamber 2011, allowing the temperature probe 1 to be laterally clipped into the probe accommodating chamber 2011 from the side. For example, in the embodiments shown in FIGS. 1-6, the side opening slot 2012 may be defined with dimensions and shape sufficient to permit insertion of the temperature probe 1 into the the probe accommodating chamber 2011. In such embodiments, the original probe insertion opening 2013 at the longitudinal end of the probe accommodating chamber 2011 may be omitted.

In other embodiments, the probe accommodating chamber 2011 is configured as a hole-like structure, with one end provided with a probe insertion opening 2013 and its surrounding sides fully enclosed. In this configuration, the hole-like structure circumferentially surrounds the temperature probe 1, preventing other objects from entering the probe accommodating chamber 2011. This not only protects the temperature probe 1 but also safeguards the internal structure of the the probe accommodating chamber 2011 itself from potential damage.

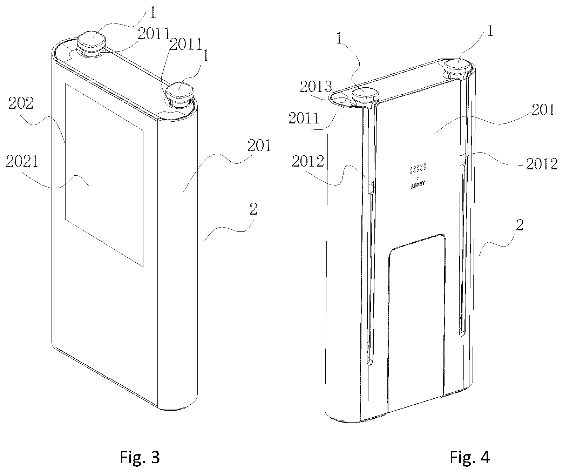

Furthermore, the number of probe accommodating cavities 2011 may be one or more. In the embodiment shown in FIGS. 1 and 2, the number of the probe accommodating chamber 2011 is one, allowing for the insertion of one temperature probe 1 correspondingly. In the embodiments shown in FIGS. 3-6, at least two probe accommodating cavities 2011 are provided, arranged side by side in a direction parallel to the screen 2021. The alignment of the probe accommodating cavities 2011 is generally parallel to the screen 2021, thereby making more efficient use of the rear space of the base body 201 behind the screen.

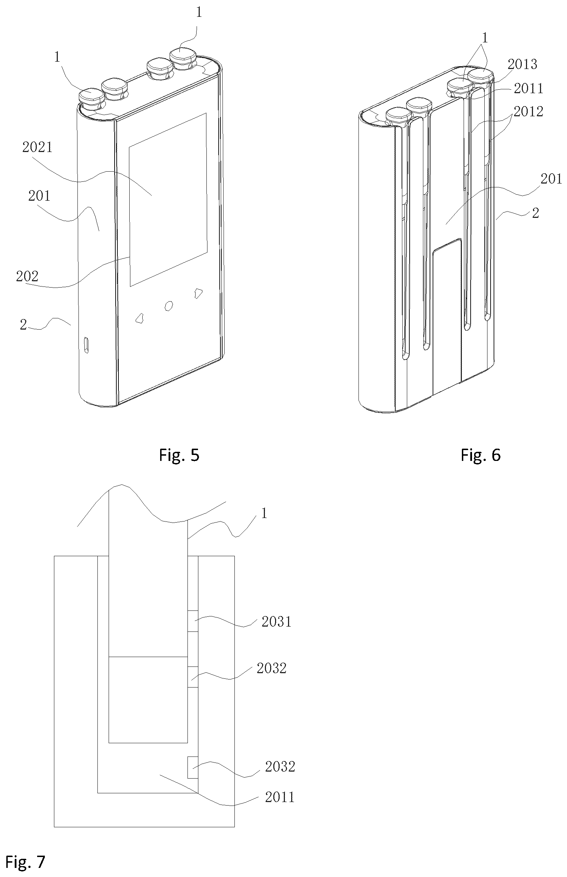

Specifically, in the embodiment shown in FIGS. 3 and 4, two probe accommodating cavities 2011 are provided, corresponding to the storage of two temperature probes 1. In the embodiment shown in FIGS. 5 and 6, four probe accommodating cavities 2011 are provided, corresponding to the storage of four temperature probes 1.

Furthermore, the base 2 may function solely as a storage device, primarily for storing the temperature probe 1 and may not necessarily include charging capabilities. Of course, in other embodiments, the base 2 may also include a charging module (not shown in the drawings), which is defined on the base body 201 and is configured to charge the temperature probe 1 inserted into the probe accommodating chamber 2011. The charging module may employ either wireless or wired charging methods. For example, the charging module may include charging contacts defined on the inner wall of the probe accommodating chamber 2011. When the temperature probe 1 is inserted into the probe accommodating chamber 2011, these contacts form an electrical connection with the temperature probe 1 to enable charging.

Specifically, referring to FIG. 7, in some embodiments, a first charging contact 2031 and at least one second charging contact 2032 are defined within the probe accommodating chamber 2011. When the first charging contact 2031 and any of the second charging contacts 2032 form an electrical connection, the base body 201 is configured to charge the temperature probe 1 inserted into the probe accommodating chamber 2011. It will be understood that the second charging contacts 2032 may be arranged at different positions along the longitudinal direction of the probe accommodating chamber 2011. As long as the temperature probe 1 makes contact with the first charging contact 2031 and any one of the second charging contacts 2032, charging can be achieved. This avoids the situation where charging fails because the temperature probe 1 has not been fully inserted to the bottom of the probe accommodating chamber 2011.

Referring again to FIG. 7, in some embodiments, the number of second charging contacts 2032 is two. One is positioned at the bottom of the probe accommodating chamber 2011, while the other is located at a position one-third of the longitudinal length of the probe accommodating chamber 2011 from the bottom of the probe accommodating chamber 2011. In this configuration, even if the temperature probe 1 is inserted only to the one-third depth of the probe accommodating chamber 2011 from the bottom of the probe accommodating chamber 2011, charging can still be successfully carried out.

Of course, the base 2 may also include other components as needed. For example, it may be equipped with a control unit (not shown in the drawings), which can control the operation of the display module 202 and may also manage the charging process of the temperature probe 1. In some embodiments, the base 2 may further include a communication unit (also not shown), which is configured to establish wired or wireless communication with the temperature probe 1 or a corresponding cooking appliance.

The foregoing has described the invention with reference to specific embodiments for illustrative purposes only, and should not be construed as limiting the scope of the invention. Those skilled in the art to which the invention pertains may make various simple derivations, modifications, or substitutions based on the spirit of the present invention without departing from its scope.

## Claims

1. A temperature probe storage base, comprising a base body and a display module, wherein the display module comprises a screen and is defined on the base body, the screen located on one side of the base body;
the base body comprises at least one probe accommodating chamber configured to receive a temperature probe; and wherein
in a direction perpendicular to the screen, the probe accommodating chamber is defined on a side opposite to a display surface of the screen.

2. The temperature probe storage base according to claim 1, wherein the probe accommodating chamber comprises a side opening slot, and the base body comprises a first surface and a second surface opposite to each other, the screen is defined on the first surface, and the side opening slot is defined on the second surface.

3. The temperature probe storage base according to claim 2, wherein the side opening slot extends along a longitudinal direction of the probe accommodating chamber, allowing the temperature probe is capable for observing inside the probe accommodating chamber through the side opening slot.

4. The temperature probe storage base according to claim 3, wherein one end of the probe accommodating chamber comprises a probe insertion opening, and one end of the side opening slot is directly connected to the probe insertion opening.

5. The temperature probe storage base according to claim 2, wherein the probe accommodating chamber comprises a probe insertion opening that extends along a longitudinal direction of the probe accommodating chamber.

6. The temperature probe storage base according to claim 1, wherein the probe accommodating chamber is a hole-like structure, one end of which is provided with a probe insertion opening, and the peripheral side of the hole-like structure is enclosed.

7. The temperature probe storage base according to claim 1, wherein the number of the probe accommodating cavities is at least two, and are arranged side by side in a direction parallel to the screen.

8. The temperature probe storage base according to any one of claims 1 to 7, further comprising a charging module defined on the base body, wherein the probe accommodating chamber is provided with a first charging contact and at least one second charging contact, the base body is configured to charge the temperature probe inserted into the probe accommodating chamber, when the first charging contact and any one of the second charging contacts are electrically connected.

9. A temperature probe storage base, comprising a base body and a display module, wherein the display module comprises a screen and is defined on the base body, with the screen located on one side of the base body;
the base body comprises at least one probe accommodating chamber configured to receive a temperature probe, and the probe accommodating chamber and the screen are arranged along the thickness direction of the base body.

10. A temperature probe assembly, comprising a temperature probe and the temperature probe storage base according to any one of claims 1 to 9, wherein the temperature probe is configured to be stored in and removable from the probe accommodating chamber of the temperature probe storage base.
